# EUROPÄISCHE PATENTSCHRIFT

(11) **EP 4 264 715 B1**
(45) Veröffentlichungstag und Bekanntmachung des Hinweises auf die Patenterteilung: **12.03.2025**
(21) Anmeldenummer: 21847455.9
(22) Anmeldetag: 17.12.2021
(51) Int. Cl.: H01M 8/0273, H01M 8/0276, H01M 8/0286, H01M 8/242

(54) **VERFAHREN ZUM BEFESTIGEN EINES GASKETS MIT EINER BIPOLARPLATTE**
METHOD FOR SECURING A GASKET ON A BIPOLAR PLATE
PROCÉDÉ DE FIXATION D'UN JOINT D'ETANCHÉITÉ À UNE PLAQUE BIPOLAIRE

(30) Priorität: 17.12.2020 DE 102020133959
(43) Veröffentlichungstag der Anmeldung: 25.10.2023
(73) Patentinhaber: Robert Bosch GmbH, 70469 Stuttgart-Feuerbach (DE); Powercell Sweden AB, 418 34 Göteborg (SE); Greenerity GmbH, 63755 Alzenau (DE)
(72) Erfinder: HALUSCHKA, Christoph, 96129 Strullendorf (DE); MAIER, Eberhard, 73257 Koengen (DE); YILDIRIM, Ali Riza, 74366 Kirchheim A.N. (DE); GERLACH, Martin, 96129 Strullendorf (DE); RINGEL, Anton, 96047 Bamberg (DE); RINGK, Andreas, 96047 Bamberg (DE); KNORR, Florian Alexander, 70372 Stuttgart (DE); MULLER, Aude, 70437 Stuttgart (DE); ANDERSSON, Jenny, 41262 Göteborg (SE); HOLMBERG, Mattias, 41313 Göteborg (SE); MUNTHE, Stefan, 426 68 Västra Frölunda (SE); ANDERSCH, Stefan, 73033 Göppingen (DE); DZIALLAS, Holger, 63538 Großkrotzenburg (DE); SUCHSLAND, Jens-Peter, 63755 Alzenau (DE)
(74) Vertreter: Maiwald GmbH
(86) Internationale Anmeldenummer: PCT/EP2021/086560
(87) Internationale Veröffentlichungsnummer: WO 2022/129561

(56) Entgegenhaltungen:
- EP-A1- 1 826 847
- US-A1- 2002 179 230
- US-A1- 2017 229 716

## Beschreibung

Die vorliegende Erfindung betrifft ein Verfahren zum Befestigen eines Gaskets mit einer Bipolarplatte und eine Brennstoffzelle, welche nach einem solchen Verfahren hergestellt ist.

### Stand der Technik

Brennstoffzellen sind elektrochemische Energiewandler, bei denen bspw. Wasserstoff und Sauerstoff in Wasser, elektrische Energie und Wärme gewandelt werden. Brennstoffzellen bzw. Brennstoffzellenstapel sind aus mehrteiligen Zellen aufgebaut, welche abwechselnd übereinander angeordnete Membranelektrodeneinheiten und Bipolarplatten aufweisen. Hierbei dienen die Bipolarplatten zur Versorgung der Elektroden mit Edukten und zur Kühlung des Brennstoffzellenstapels. Die Bipolarplatten weisen hierzu eine Verteilerstruktur auf, die Edukt enthaltende Fluide entlang den Elektroden führen. Darüber hinaus dienen die Verteilerstrukturen dazu ein Kühlfluid entlang der weiteren Verteilerstrukturen zu führen. Diese Verteilerstrukturen sind dabei als Kanäle ausgebildet, wodurch die unterschiedlichen Fluide leitbar sind.

Aus der DE 10 2005 058 370 A1 ist eine Brennstoffzelle bekannt, welche zwei Bipolarplatte aufweist, wobei zwischen den Bipolarplatten eine Membran-Elektrodeneinheit und zwischen der Membran-Elektrodeneinheit und den Bipolarplatten jeweils eine Gas-Diffusions-Lage angeordnet sind. Die Membran-Elektrodeneinheit ist dabei an einem Trägerrahmen angeordnet. Zwischen der Membran-Elektrodeneinheit und dem Trägerrahmen ist eine Ultraschallschweißverbindung ausgebildet, über welche die Membran-Elektrodeneinheit mit dem Trägerrahmen verbunden ist.

Aus dem Stand der Technik ist es ebenso bekannt, dass der Trägerrahmen direkt über eine Ultraschallschweißverbindung mit der Bipolarplatte verbunden ist. Ebenso kann anstelle der Ultraschallschweißverbindung eine mittels Laser hergestellte Schweißverbindung verwendet werden. Diese Verfahren haben zwar den Vorteil, dass kein zusätzliches Material benötigt wird, trotz alledem ist eine raue Oberfläche notwendig.

Aus der DE 10 2017 101 958 A1 ist des weiteren ein Verfahren zum Befestigen eines Separators an einem Dichtungselement einer Brennstoffzelle bekannt, wobei das Dichtungselement beidseitig eine Klebeschicht aufweist, und an dem Separator angeordnete Ausprägungen während des Warmpressens mit der Klebeschicht verbunden werden.

Die Aufgabe der vorliegenden Erfindung liegt darin, ein Verfahren zum Befestigen eines Gaskets mit eine Bipolarplatte anzugeben, bei welchem das Gasket mit wenig zusätzlichem Material auf einfache und wirtschaftliche Weise mit der Bipolarplatte verbunden werden kann.

Zur Lösung der Aufgabe werden das Verfahren zum Befestigen eines Gaskets mit einer Bipolarplatte mit den Merkmalen des Anspruchs 1, sowie eine Brennstoffzelle, welche nach einem solchen Verfahren hergestellt ist, angegeben. Vorteilhafte Weiterbildungen der Erfindung sind den jeweiligen Unteransprüchen zu entnehmen.

### Offenbarung der Erfindung

Vorgeschlagen wird ein Verfahren zum Befestigen eines Gaskets mit einer Bipolarplatte umfassend die Schritte des Aufbringens und Ausrichtens einer ersten Gasket-Folie auf eine, Verbindungsaussparungen aufweisende, zweite Gasket-Folie, des Verbindens der ersten Gasket-Folie mit der zweiten Gasket-Folie, so dass das Gasket gebildet wird, des Auflegens des Gaskets auf die Bipolarplatte, so dass die zweite Gasket-Folie mit den Verbindungsaussparungen an der Bipolarplatte anliegt. In einem weiteren Verfahrensschritt wir ein Prägeschritt durchgeführt, bei welchem mit einem Präge-Werkzeug im Bereich der Verbindungsaussparungen eine Prägekraft aufgebracht wird, so dass ein geprägter Klebepunkt gebildet wird und die erste Gasket-Folie über ein in der Verbindungsaussparung auf der ersten Gasket-Folie angeordnetes Klebemittel mit der Bipolarplatte verbunden wird.

Unter einer Verbindungsaussparung im Sinne der vorliegenden Erfindung wird ein Durchbruch durch die zweite Gasket-Folie verstanden, welche eine Verbindung ermöglicht. Als Klebepunkt wird der Bereich verstanden, bei welchem die erste Gasket-Folie mit der Bipolarplatte verbunden ist. Durch den Prägeschritt wird das Gasket lediglich im Bereich der Verbindungsaussparungen mit der Bipolarplatte verbunden. Diese Verbindung wird mittels eines einfach durchzuführenden Prägeschritts erzielt. Zusätzlich muss lediglich im Bereich der Verbindungsaussparungen ein Klebemittel vorgesehen werden. Dadurch wird somit wenig Klebemittel zur Befestigung des Gaskets mit der Bipolarplatte benötigt. Dementsprechend wird lediglich wenig zusätzliches Material benötigt. Zudem ist ein solches Verfahren somit einfach und wirtschaftlich durchführbar.

In einer bevorzugten Ausführung der Erfindung wird vor einem Verbinden der ersten Gasket-Folie mit der zweiten Gasket-Folie auf wenigstens der ersten Gasket-Folie ein Klebemittel aufgebracht. Die erste und zweite Gasket-Folie werden somit über eine Klebeverbindung miteinander verbunden. Durch die Verbindungsaussparung ist in diesem Bereich weiterhin Klebemittel angeordnet. Über dieses Klebemittel wird das Gasket mit der Bipolarplatte verbunden. Es wird somit kein zusätzlicher Schritt benötigt, um das Klebemittel aufzubringen. Da dieses Klebemittel zum Verbinden der ersten und der zweiten Gasket-Folie aufgebracht wird, wird kein zusätzliches Material zum Verbinden des Gasket mit der Bipolarplatte benötigt. Dadurch kann ein solches Verfahren einfach und wirtschaftlich durchgeführt werden.

In einer weiteren bevorzugten Ausführung der Erfindung ist das Klebemittel ein UV-Kleber ist, so dass der UV-Kleber mittels einer UV-Quelle ausgehärtet wird. Bevorzugt ist dabei wenigstens die erste Gasket-Folie durchlässig für UV-Licht, so dass das Klebemittel mit einer UV-Quelle ausgehärtet werden kann. Durch diesen Verfahrensschritt kann das Gasket mit der Bipolarplatte zu einem bestimmten Zeitpunkt verbunden werden, so dass weiterhin eine Korrektur der Position möglich ist. Zudem ermöglicht eine Aushärtung über UV-Licht eine einfache und gesteuerte Befestigung.

Vorzugsweise ist das Klebemittel ein Heißkleber, so dass die Gasket-Folien mittels eines Laminier-Prozesses miteinander verbunden werden. Ein Heißkleber ist dabei ein Klebemittel, welches bei Einwirkung von Hitze in einen adhäsiven Zustand übergeht. Durch einen solchen Verfahrensschritt ist es möglich, die beiden Gasket-Folien über ein Erhitzen, einfach miteinander zu verbinden. In dem Laminier-Prozess werden die beiden Gasket-Folien vorzugsweise mit einer Temperatur von 100-200°C und einem Druck von 0,5-5MPa verbunden.

In einer vorteilhaften Weiterbildung wird die Prägekraft auf die erste Gasket-Folie aufgebracht. Alternativ ist es natürlich auch möglich die Prägekraft auf die Bipolarplatte aufzubringen. Da die erste Gasket-Folie jedoch nachgiebiger ist, als die Bipolarplatte, lässt sich dadurch leichter eine Verbindung zwischen der Bipolarplatte und der ersten Gasket-Folie herstellen. Zudem wird vorgebeugt, dass die Verteilerstruktur der Bipolarplatte beschädigt wird. Vorzugsweise wird eine Prägekraft im Bereich von 0,5-5MPa aufgebracht.

Vorteilhafterweise wird mit dem Prägeschritt das Präge-Werkzeug aufgeheizt, so dass sich ein in der Verbindungsaussparung angeordneter Heißkleber mit der Bipolarplatte verbindet. Dadurch kann gleichzeitig mit dem Prägeschritt eine Klebeverbindung zwischen der Bipolarplatte und der ersten Gasket-Folie erzielt werden. Die Anzahl an Verfahrensschritten wird dadurch reduziert. Vorzugsweise wird das Präge-Werkzeug auf eine Temperatur von 100-200°C aufgeheizt. Besonders bevorzugt ist die Temperatur 130-170°C.

Bevorzugt ist der Heißkleber der Kleber, der zur Verbindung der ersten Gasket-Folie mit der zweiten Gasket-Folie aufgebracht wurde, so dass auch kein zusätzlicher Verfahrensschritt zum Aufbringen des Heißklebers beziehungsweise zusätzlicher Heißkleber notwendig ist.

Ferner wird eine Brennstoffzelle für einen Brennstoffzellenstack vorgeschlagen. Die Brennstoffzelle weist wenigstens eine Bipolarplatte und ein Gasket auf, bei welchem das Gasket eine erste und zweite Gasket-Folie umfasst, wobei die zweite Gasket-Folie Verbindungsaussparungen aufweist und an der Bipolarplatte anliegt, und das Gasket über geprägte Klebepunkte, die im Bereich der Verbindungsaussparungen ausgebildet sind, mittels in den Verbindungsaussparungen angeordnetem Klebemittel mit der Bipolarplatte verbunden ist. Die Brennstoffzelle ist vorzugsweise nach dem vorgenannten Verfahren hergestellt. Eine solche Brennstoffzelle weist dabei im Wesentlichen die zu dem Verfahren beschriebenen Vorteile auf. Insbesondere weisen solche Brennstoffzellen durch die positionsgenaue Anordnung von Gasket und Bipolarplatte einen höheren Wirkungsgrad auf.

Bei einer weiteren vorteilhaften Ausführung weisen die Klebepunkte eine geometrische Form auf, bei welcher eine Klebepunktseite der geometrischen Form parallel zu einer Quermittelachse der Bipolarplatte verläuft und zu dieser Quermittelachse ausgerichtet ist. Als geometrische Form wird dabei die zweidimensionale geometrische Gestalt verstanden, welche sich bei einer Draufsicht auf die Bipolarplatte durch den Klebepunkt ergibt. Die Klebepunktseite ist eine Seite der geometrischen Form, die als Linie verläuft. Die Quermittelachse ist dabei eine Achse, welche quer zur Bipolarplatte verläuft und mittig von dieser angeordnet ist. Zusätzlich zu der parallelen Anordnung ist diese Klebepunktseite näher zu der Quermittelachse angeordnet, als die übrigen Seiten des Klebepunktes.

Eine in Längsrichtung gerichtete Schälkraft wirkt dementsprechend orthogonal auf die gesamte Klebepunktseite, so dass sich die Schälkraft besser auf diese Klebepunktseite verteilt. Dadurch wird die Haltbarkeit eines solchen Klebepunktes wesentlich verbessert.

Gemäß einer zweckmäßigen Ausführung weisen die Klebepunkte zusätzlich eine Klebepunktseite auf, die parallel zu einer Längsmittelachse verläuft und zu dieser Längsmittelachse ausgerichtet ist. Eine Längsmittelachse verläuft entsprechend der Quermittelachse, in Längsrichtung der Bipolarplatte und ist in deren Mitte angeordnet. Da prinzipiell auch eine in Querrichtung verlaufende Schälkraft auftritt, welche jedoch geringer als die Schälkraft in Längsrichtung ist, wird durch eine zusätzlich parallel zur Längsmittelachse ausgerichtete Klebepunktseite, die Haltbarkeit eines Klebepunktes in Bezug auf eine Schälkraft in Querrichtung, verbessert. Diese Klebepunktseite ist zu einer Mitte in Querrichtung der Bipolarplatte ausgerichtet.

Des Weiteren wird ein Brennstoffzellenstack vorgeschlagen, welcher mehrere Brennstoffzellen aufweist. Ein solcher Brennstoffzellenstack weist dabei die zuvor genannten Vorteile auf.

Ausführungsbeispiele der Erfindung sind in der Zeichnung dargestellt und in der nachfolgenden Beschreibung näher erläutert. Es zeigt:
- Figur 1: Perspektivische Ansicht des Aufbaus einer erfindungsgemäßen Brennstoffzelle,
- Figur 2: Verfahrensschritte zum Befestigen des Gaskets auf der Bipolarplatte, und
- Figur 3: Brennstoffzelle mit verschiedenen Ausführungsbeispielen eines Klebepunktes.

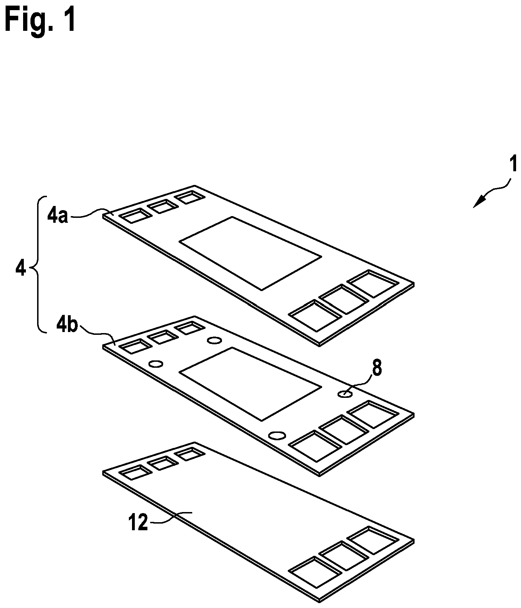

In Figur 1 ist eine perspektivische Ansicht des Aufbaus einer erfindungsgemäßen Brennstoffzelle 1 gezeigt. Die Brennstoffzelle 1 weist dabei wenigstens eine erste Gasket-Folie 4a und eine zweite Gasket-Folie 4b auf. Die erste Gasket-Folie 4a und die zweite Gasket-Folie 4b ergeben zusammen das Gasket 4 der Brennstoffzelle 1. Diese sind, wie in der Figur gezeigt, direkt übereinander gestapelt. Im Unterschied zu der ersten Gasket-Folie 4a, weist die zweite Gasket-Folie 4b vier Verbindungsaussparung 8 auf, welche symmetrisch auf der zweiten Gasket-Folie 4b angeordnet sind. In diesem Ausführungsbeispiel sind diese Verbindungsaussparungen 8 als runde Löcher ausgeführt. Die Brennstoffzelle 1 weist zusätzlich eine Bipolarplatte 12 auf, auf welcher das Gasket 4 aufliegt. Die Bipolarplatte 12 weist in bekannter Weise eine Verteilstruktur auf, um die Edukte entlang einer nicht gezeigten Elektrode zu führen.

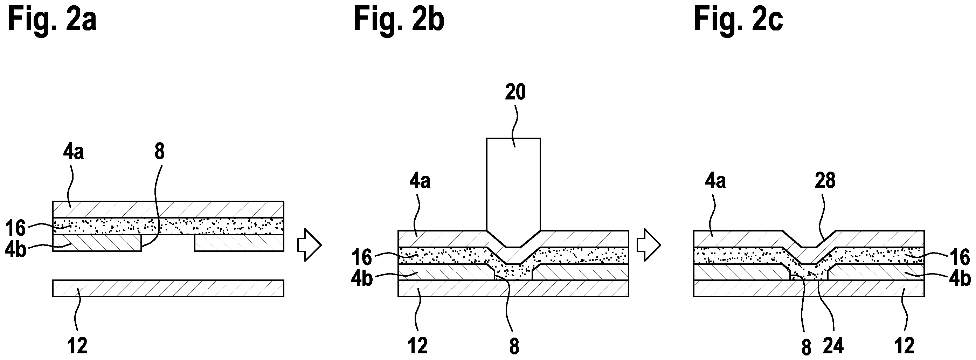

Figur 2 zeigt die Verfahrensschritte zum Befestigen des Gaskets 4 auf der Bipolarplatte 12. In dieser Figur ist eine Schnitt durch einen Bereich einer Verbindungsaussparung 8 gezeigt. Die Teilfigur 2a. zeigt dabei das zwischen der ersten und zweiten Gasket-Folie 4a, 4b ein Klebemittel 16 angeordnet ist, über welche beide Gasket-Folien 4a, 4b miteinander verbunden werden. In diesem Ausführungsbeispiel ist das Klebemittel 16 ein Heißkleber, über welchen beide Gasket-Folien 4a, 4b mittels eines Laminier-Prozesses miteinander verbunden werden. Aufgrund der Verbindungsaussparung 8 kommt es in diesem Bereich zu keiner Verbindung beider Gasket-Folien 4a, 4b. Die Teilfigur 2a zeigt den Schritt, bevor das Gasket 4 auf die Bipolarplatte 12 aufgelegt wird.

In Teilfigur 2b ist der Schritt gezeigt, bei welchem mittels eines Präge-Werkzeuges 20 ein Prägeschritt durchgeführt wird. In diesem Schritt liegt die zweite Gasket-Folie 4b direkt an der Bipolarplatte 12 an. Das Präge-Werkzeug 20 ist dabei im Bereich der Verbindungsaussparung 8 positioniert und bringt eine Prägekraft auf die erste Gasket-Folie 4a auf. Dadurch wird das auf der ersten Gasket-Folie 4a angeordnete Klebemittel 16 in Kontakt mit der Bipolarplatte 12 gebracht. In diesem Ausführungsbeispiel wird das Präge-Werkzeug 20 aufgeheizt, so dass sich die erste Gasket-Folie 4a über das als Heißkleber ausgebildete Klebemittel 16 mit der Bipolarplatte 12 verbindet.

Durch den Prägeschritt wird ein geprägter Klebepunkt 24 ausgebildet, welcher im Wesentlichen durch die Form der Verbindungsaussparung 8 und die Form des Präge-Werkzeuges 20 bestimmt ist. Teilfigur 2c zeigt den entsprechenden Teil der Brennstoffzelle 1 nachdem das Präge-Werkzeug 20 entfernt worden ist. Hier ist zu sehen, dass durch das Präge-Werkzeug 20 eine Vertiefung 28 in der ersten Gasket-Folie 4a gebildet wurde. Diese Vertiefung 28 reicht bis in die Verbindungsaussparung 8 der zweiten Gasket-Folie 4b. Dadurch wird die mechanische Verbindung zwischen beiden Gasket-Folien 4a, 4b nochmals verbessert.

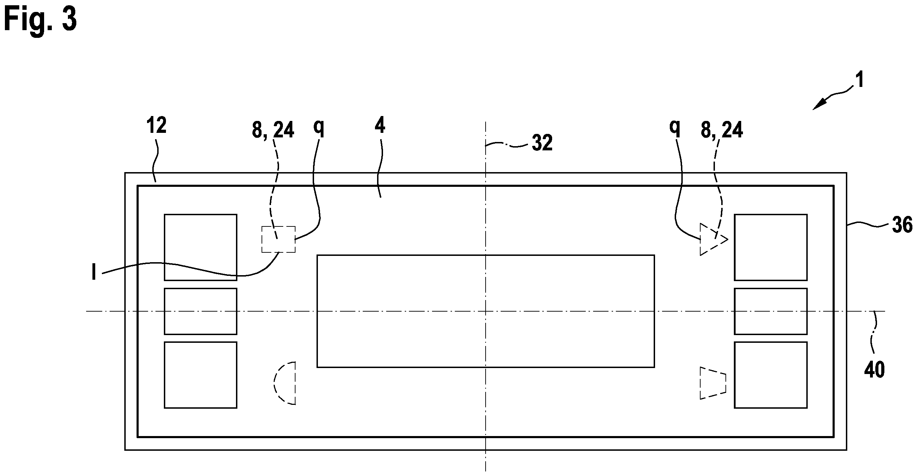

Figur 3 zeigt eine Draufsicht auf eine derart hergestellte Brennstoffzelle 1. In dieser Figur wurden abgesehen von den in Figur 1 gezeigten runden Verbindungsaussparungen 8 vier weitere gestrichelt eingezeichnete Ausführungsbeispiele für Verbindungsaussparungen 8 dargestellt. Durch die derart hergestellten Verbindungsaussparungen 8 werden entsprechende geometrische Formen von Klebepunkten 24 erzeugt.

Der in der oberen rechten Ecke als Dreieck dargestellte Klebepunkt 24 weist eine Klebepunktseite q auf, welche parallel zu einer Quermittelachse 32 der Brennstoffzelle 1 ausgebildet ist. Zusätzlich weist diese Klebepunktseite q zu der Quermittelachse 32. Dadurch wird eine in Längsrichtung zu Rändern 36 der Brennstoffzelle 1 gerichtete Schälkraft auf die Klebepunktseite q aufgebracht, so dass die Haltbarkeit des Klebepunktes 24 verbessert wird. Der rechte und linke untere Klebepunkt 24 zeigen weitere mögliche geometrische Ausbildungen, welche ebenfalls diese Vorteile aufweisen.

In der oberen linken Ecke ist ein als Rechteck ausgebildeter Klebepunkt 24 gezeigt. Dieser weist zusätzlich zu der vorgenannten Klebepunktseite q eine weitere Klebepunktseite l auf, die parallel zu einer Längsmittelachse 40 angeordnet ist und zusätzlich zu dieser weist. Dadurch wird zusätzlich die Haltbarkeit des Klebepunktes 24 in Bezug auf eine in Querrichtung wirkenden Schälkraft verbessert.

### Bezugszeichenliste

- 1: Brennstoffzelle
- 4: Gasket
- 4a: erste Gasket-Folie
- 4b: zweite Gasket-Folie
- 8: Verbindungsaussparung
- 12: Bipolarplatte
- 16: Klebemittel
- 20: Präge-Werkzeug
- 24: Klebepunkt
- 28: Vertiefung
- 32: Quermittelachse
- 36: Rand
- 40: Längsmittelachse
- q: Klebepunktseite
- l: Klebepunktseite

## Patentansprüche

1. Verfahren zum Befestigen eines Gaskets (4) mit einer Bipolarplatte (12) umfassend die Schritte:
- Aufbringen und Ausrichten einer ersten Gasket-Folie (4a) auf eine, Verbindungsaussparungen (8) aufweisende, zweite Gasket-Folie (4b),
- Verbinden der ersten Gasket-Folie (4a) mit der zweiten Gasket-Folie (4b), so dass das Gasket (4) gebildet wird,
- Auflegen des Gaskets (4) auf die Bipolarplatte (12), so dass die zweite Gasket-Folie (4b) mit den Verbindungsaussparungen (8) an der Bipolarplatte (12) anliegt,
- Durchführen eines Prägeschritts, bei welchem mit einem Präge-Werkzeug (20) im Bereich der Verbindungsaussparungen (8) eine Prägekraft aufgebracht wird, so dass ein geprägter Klebepunkt (24) gebildet wird und die erste Gasket-Folie (4a) über ein in der Verbindungsaussparung (8) auf der ersten Gasket-Folie (4a) angeordnetes Klebemittel (16) mit der Bipolarplatte (12) verbunden wird.

2. Verfahren nach Anspruch 1, **dadurch gekennzeichnet, dass** vor einem Verbinden der ersten Gasket-Folie (4a) mit der zweiten Gasket-Folie (4b) auf wenigstens der ersten Gasket-Folien (4a) ein Klebemittel (16) aufgebracht wird.

3. Verfahren nach Anspruch 1 oder 2, **dadurch gekennzeichnet, dass** das Klebemittel (16) ein UV-Kleber ist, so dass der UV-Kleber mittels einer UV-Quelle ausgehärtet wird.

4. Verfahren nach Anspruch 2, **dadurch gekennzeichnet, dass** das Klebemittel (16) ein Heißkleber ist, so dass die Gasket-Folien (4a, 4b) mittels eines Laminier-Prozesses miteinander verbunden werden.

5. Verfahren nach einem der vorherigen Ansprüche, **dadurch gekennzeichnet, dass** die Prägekraft auf die erste Gasket-Folie (4a) aufgebracht wird.

6. Verfahren nach einem der vorherigen Ansprüche, **dadurch gekennzeichnet, dass** mit dem Prägeschritt das Präge-Werkzeug (20) aufgeheizt wird, so dass sich ein in der Verbindungsaussparung (8) angeordneter Heißkleber mit der Bipolarplatte (12) verbindet.

7. Brennstoffzelle (1) für einen Brennstoffzellenstack, wobei die Brennstoffzelle (1) wenigstens eine Bipolarplatte (12) und ein Gasket (4) aufweist, bei welchem das Gasket (4) eine erste und zweite Gasket-Folie (4a, 4b) umfasst, wobei die zweite Gasket-Folie (4b) Verbindungsaussparungen (8) aufweist und an der Bipolarplatte (12) anliegt, und das Gasket (4) über geprägte Klebepunkte (24), die im Bereich der Verbindungsaussparungen (8) ausgebildet sind, mittels in den Verbindungsaussparungen (8) angeordnetem Klebemittel (16) mit der Bipolarplatte (12) verbunden ist.

8. Brennstoffzelle (1) nach Anspruch 7, **dadurch gekennzeichnet, dass** die Klebepunkte (24) eine geometrische Form aufweisen, bei welcher eine Klebepunktseite (q) der geometrischen Form parallel zu einer Quermittelachse (32) der Bipolarplatte (1) verläuft und zu dieser Quermittelachse (32) ausgerichtet ist.

9. Brennstoffzelle (1) nach Anspruch 8, **dadurch gekennzeichnet, dass** die Klebepunkt (24) zusätzlich eine Klebepunktseite (l) aufweisen, die parallel zu einer Längsmittelachse (40) verläuft und zu dieser Längsmittelachse (40) ausgerichtet ist.

10. Brennstoffzellenstack, welcher mehrere Brennstoffzellen (1) nach einem der Ansprüche 7 bis 9 aufweist.

## Claims

1. Method for securing a gasket (4) to a bipolar plate (12), comprising the steps of:
- applying and aligning a first gasket film (4a) to/with a second gasket film (4b) having connecting cutouts (8),
- connecting the first gasket film (4a) to the second gasket film (4b), so that the gasket (4) is formed,
- placing the gasket (4) onto the bipolar plate (12), so that the second gasket film (4b) with the connecting cutouts (8) bears against the bipolar plate (12),
- carrying out an embossing step, in which an embossing force is applied in the region of the connecting cutouts (8) by an embossing tool (20), so that an embossed adhesive point (24) is formed and the first gasket film (4a) is connected to the bipolar plate (12) via an adhesive (16) arranged in the connecting cutout (8) on the first gasket film (4a).

2. Method according to Claim 1, **characterized in that** an adhesive (16) is applied to at least the first gasket film (4a) before the first gasket film (4a) is connected to the second gasket film (4b).

3. Method according to Claim 1 or 2, **characterized in that** the adhesive (16) is a UV adhesive, so that the UV adhesive is cured by means of a UV source.

4. Method according to Claim 2, **characterized in that** the adhesive (16) is a hot-melt adhesive, so that the gasket films (4a, 4b) are connected to each other by means of a laminating process.

5. Method according to any of the preceding claims, **characterized in that** the embossing force is applied to the first gasket film (4a).

6. Method according to any of the preceding claims, **characterized in that** the embossing tool (20) is heated up with the embossing step, so that a hot-melt adhesive arranged in the connecting cutout (8) is connected to the bipolar plate (12).

7. Fuel cell (1) for a fuel cell stack, wherein the fuel cell (1) has at least one bipolar plate (12) and a gasket (4), in which the gasket (4) comprises a first and a second gasket film (4a, 4b), wherein the second gasket film (4b) has connecting cutouts (8) and bears against the bipolar plate (12), and the gasket (4) is connected to the bipolar plate (12) via embossed adhesive points (24), which are formed in the region of the connecting cutouts (8), by means of adhesive (16) arranged in the connecting cutouts (8).

8. Fuel cell (1) according to Claim 7, **characterized in that** the adhesive points (24) have a geometric shape in which an adhesive point side (q) of the geometric shape runs parallel to a transverse centre axis (32) of the bipolar plate (1) and is aligned with this transverse centre axis (32).

9. Fuel cell (1) according to Claim 8, **characterized in that** the adhesive points (24) additionally have an adhesive point side (I), which runs parallel to a longitudinal centre axis (40) and is aligned with this longitudinal centre axis (40).

10. Fuel cell stack, which has a plurality of fuel cells (1) according to any of Claims 7 to 9.

## Revendications

1. Procédé de fixation d'un joint d'étanchéité (4) à une plaque bipolaire (12), comprenant les étapes :
- application et orientation d'une première feuille de joint d'étanchéité (4a) sur une deuxième feuille de joint d'étanchéité (4b) présentant des évidements de liaison (8),
- liaison de la première feuille de joint d'étanchéité (4a) avec la deuxième feuille de joint d'étanchéité (4b) de manière à former le joint d'étanchéité (4),
- pose du joint d'étanchéité (4) sur la plaque bipolaire (12) de manière à ce que la deuxième feuille du d'étanchéité (4b) repose contre la plaque bipolaire (12) par les évidements de liaison (8),
- exécution d'une étape de gaufrage, lors de laquelle une force de gaufrage est appliquée dans la zone des évidements de liaison (8) avec un outil de gaufrage (20), de sorte qu'un point de collage gaufré (24) est formé et que la première feuille de joint d'étanchéité (4a) est reliée à la plaque bipolaire (12) par le biais d'un agent adhésif (16) disposé dans l'évidement de liaison (8) sur la première feuille de joint d'étanchéité (4a).

2. Procédé selon la revendication 1, **caractérisé en ce qu'**un agent adhésif (16) est appliqué sur au moins les premières feuilles de joint d'étanchéité (4a) avant la liaison des premières feuilles de joint d'étanchéité (4a) avec les deuxièmes feuilles de joint d'étanchéité (4b).

3. Procédé selon la revendication 1 ou 2, **caractérisé en ce que** l'agent adhésif (16) est un adhésif UV, de sorte que l'adhésif UV est durci au moyen d'une source d'UV.

4. Procédé selon la revendication 2, **caractérisé en ce que** l'agent adhésif (16) est un adhésif thermofusible, de sorte que les films de joint d'étanchéité (4a, 4b) sont liés entre eux au moyen d'un processus de laminage.

5. Procédé selon l'une des revendications précédentes, **caractérisé en ce que** la force de gaufrage est appliquée à la première feuille de joint d'étanchéité (4a).

6. Procédé selon l'une des revendications précédentes, **caractérisé en ce que** l'outil de gaufrage (20) est chauffé lors de l'étape de gaufrage, de sorte qu'un adhésif thermofusible disposé dans l'évidement de liaison (8) se lie à la plaque bipolaire (12).

7. Pile à combustible (1) pour un empilement de piles à combustible, la pile à combustible (1) possédant au moins une plaque bipolaire (12) et un joint d'étanchéité (4), avec laquelle le joint d'étanchéité (4) comprend une première et une deuxième feuille de joint d'étanchéité (4a, 4b), la deuxième feuille de joint d'étanchéité (4b) possédant des évidements de liaison (8) et reposant contre la plaque bipolaire (12), et le joint d'étanchéité (4) étant relié à la plaque bipolaire (12) par le biais de points de collage gaufrés (24), qui sont formés dans la zone des évidements de liaison (8), au moyen d'un agent adhésif (16) disposé dans les évidements de liaison (8).

8. Pile à combustible (1) selon la revendication 7, **caractérisée en ce que** les points de collage (24) présentent une forme géométrique avec laquelle un côté de point de collage (q) de la forme géométrique suit un tracé parallèle à un axe central transversal (32) de la plaque bipolaire (1) et est aligné avec cet axe central transversal (32).

9. Pile à combustible (1) selon la revendication 8, **caractérisée en ce que** les points de collage (24) possèdent en outre un côté de point de collage (l) qui suit un tracé parallèle à un axe central longitudinal (40) et qui est orienté par rapport à cet axe central longitudinal (40).

10. Empilement de piles à combustible, qui possède plusieurs piles à combustible (1) selon l'une des revendications 7 à 9.
